# EUROPÄISCHE PATENTSCHRIFT

(11) **EP 2 111 740 B1**
(45) Veröffentlichungstag und Bekanntmachung des Hinweises auf die Patenterteilung: **29.06.2011**
(21) Anmeldenummer: 09005440.4
(22) Anmeldetag: 16.04.2009
(51) Int. Cl.: A01D 41/14, A01D 43/08, A01B 73/04

(54) **Erntevorsatzgerät zum Ernten von stängeligem Erntegut**
Harvesting attachment for harvesting stalk crops
Attachement pour moissonner la récolte des plantes à tige

(30) Priorität: 22.04.2008 DE 102008020240
(43) Veröffentlichungstag der Anmeldung: 28.10.2009
(73) Patentinhaber: CLAAS Saulgau GmbH, 88348 Bad Saulgau (DE)
(72) Erfinder: Birkhofer, Stefan, 78333 Srockach (DE); Loebe, Stefan, 88348 Bad Saulgau (DE)

(56) Entgegenhaltungen:
- WO-A1-2006/079609
- DE-A1- 4 138 213
- DE-A1- 10 303 380
- DE-U1- 29 817 666
- DE-U1-202008 005 596

## Beschreibung

Die Erfindung betrifft ein Erntevorsatzgerät zum Ernten von stängelartigem Erntegut wie Mais oder dergleichen, nach dem Oberbegriff des Anspruchs 1.

Ein derartiges Erntevorsatzgerät ist beispielsweise durch die Druckschrift DE 10 2004 022 534 A1 bekannt. Diese Druckschrift beschreibt eine selbstfahrende Erntemaschine als Feldhäcksler mit einem Erntevorsatzgerät bekannt unter der Bezeichnung Maisgebiss.

Dieses Erntevorsatzgerät beschreibt einen Klappmechanismus zum Überführen eines Maisgebisses von der Arbeitsstellung, die wesentlich über die zulässige Straßentransportbreite hinausgeht, in die zusammengefaltete, d.h. verklappte Transportstellung. Es weist drei Mäh- und Einzugseinheiten auf, die eine Reihe von insbesondere trommelartigen und um im wesentlichen vertikale Drehachsen rotierbare, an Tragelementen befestigte Mäh- und Einzugsorgane aufweisen, wobei die mittlere Mäh- und Einzugseinheit etwa der Breite des Trägerfahrzeugs entspricht und die beiden seitlichen Mäh- und Einzugseinheiten, die ebenfalls etwa der Breite des Trägerfahrzeugs entsprechen, um etwa 180° verklappt werden können, dass diese in der Transportstellung verklappt oberhalb der mittleren Mäh- und Einzugseinheiten in einer geschichteten Lage übereinanderliegend angeordnet sind.

Die Druckschritt DE 103 03 380 A1 offenbart ein Erntevorsatzgerät sowie den Oberbegriff des Anspruchs 1.

Die nachfolgend beschriebene Erfindung hat sich zur Aufgabe gestellt, ein Erntevorsatzgerät der eingangs beschriebenen Art für noch größere Arbeitsbreiten weiter zu entwickeln, so dass die Transportbreite ebenfalls nicht überschritten wird und der Fahrer während der Transportfahrt einen hinreichenden freien Sichtkegel nach vorn und zur Seite hat.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Dementsprechend zeichnet sich ein erfindungsgemäßes Erntevorsatzgerät dadurch aus, dass die endseitigen und die mittleren Mäh- und Einzugseinheiten um die Schwenkachsen ihrer Klappgelenke, welche sie untereinander mit der zentralen Mäh- und Einzugseinheit verbinden, so verklappt und zueinander gefaltet werden, dass die endseitigen Mäh- und Einzugseinheiten eine Transportlage oberhalb der einen und zugleich unterhalb der anderen mittleren Mäh- und Einzugseinheit einnehmen.

Dabei werden die endseitigen Mäh- und Einzugseinheiten relativ zu ihren direkt benachbarten mittleren Mäh- und Einzugseinheiten um die Schwenkachsen von Klappgelenken so verschwenkt, dass die eine äußere Mäh- und Einzugseinheit gleichsinnig zur Drehrichtung der ihr benachbarten mittleren Mäh- und Einzugseinheit, und die andere äußere Mäh- und Einzugseinheit gegensinnig zu ihrer benachbarten mittleren Mäh- und Einzugseinheit in ihre Transportlage verschwenkt werden. Dabei liegen die endseitigen Mäh- und Einzugseinheiten in ihrer Transportstellung oberhalb der zentralen Mäh- und Einzugseinheit etwa parallel geschichtet und zusammengefaltet zwischen den beiden mittleren Seitenteilen, etwa auf gleicher Höhe, sich diametral in der selben Ebene gegenüber.

Um die so mögliche maximale Arbeitsbreite 28 zu erlangen, entspricht die Arbeitsbreite 25 der zentralen Mäh- und Einzugseinheit 8 etwa der Breite des Trägerfahrzeugs 29, wobei die Arbeitsbreiten 26 der mittleren Mäh- und Einzugseinheiten 9,9' wiederum etwa der Arbeitsbreite 25 der zentralen Mäh- und Einzugseinheit 8 entsprechen. Hingegen betragen die Arbeitsbreiten 27,27' der endseitigen Mäh- und Einzugseinheit 10,10' etwa der halben Arbeitsbreite 25 der mittleren Mäh- und Einzugseinheit 8. Die umlaufend angetriebenen Mäh-Einzugs- und Förderorgane 3 der Mäh- und Einzugseinheiten 8,9,9',10,10' können als scheiben- und/oder trommelförmig oder auch als endlos umlaufende Mäh- Einzugs- und Förderorgane 3 ausgebildet sein. Alternativ können die Schneidelemente der Mäh- und Einzugseinheiten 8,9,9',10,10' auch als oszillierende Schneidwerkzeuge, wie beispielsweise die eines dem Fachmann bekannten Messerbalkens ausgebildet sein.

Nähere Einzelheiten der Erfindung sind den nachfolgenden Figurendarstellungen und deren Beschreibungen zu entnehmen.

Es zeigen:
- Fig.1: Trägerfahrzeug mit Erntevorsatzgerät nach der Erfindung in einer perspektivischen Draufsicht auf die Arbeitsebene in einer Momentaufnahme während des Zusammenklappens von der Arbeits- in die Transportstellung, oder umgekehrt.
- Fig.2: Erntevorsatzgerät nach der Erfindung in Arbeitsstellung in einer perspektivischen Draufsicht auf die Arbeitsebene ohne Trägerfahrzeug.
- Fig.3: Trägerfahrzeug mit Erntevorsatzgerät nach der Erfindung in einer Vorderansicht entgegen der Fahrtrichtung mit angehobenem Erntevorsatzgerät in gestreckter Lage.
- Fig.3a: Trägerfahrzeug mit Erntevorsatzgerät nach der Erfindung in einer Vorderansicht entgegen der Fahrtrichtung mit angehobenem Erntevorsatzgerät in teils verklappter Lage, zur Überführung in die Transportstellung.
- Fig.3b: Trägerfahrzeug mit Erntevorsatzgerät nach der Erfindung in einer Vorderansicht entgegen der Fahrtrichtung mit angehobenem Erntevorsatzgerät in weiter fortgeschrittenem Zustand gegenüber der in Fig.3a dargestellten Situation.
- Fig.3c: Trägerfahrzeug mit Erntevorsatzgerät nach der Erfindung in einer Vorderansicht entgegen der Fahrtrichtung mit angehobenem Erntevorsatzgerät in weiter fortgeschrittenem Zustand gegenüber der in Fig.3b dargestellten Situation.
- Fig.3d: Trägerfahrzeug mit Erntevorsatzgerät nach der Erfindung in einer Vorderansicht entgegen der Fahrtrichtung mit angehobenem Erntevorsatzgerät in weiter fortgeschrittenem Zustand gegenüber der in Fig.3c dargestellten Situation.
- Fig.3e: Trägerfahrzeug mit Erntevorsatzgerät nach der Erfindung in einer Vorderansicht entgegen der Fahrtrichtung mit angehobenem Erntevorsatzgerät in weiter fortgeschrittenem Zustand gegenüber der in Fig.3d dargestellten Situation, d.h. in der endgültig zusammengefalteten Lage der Transportstellung.
- Fig.4: Trägerfahrzeug mit angehobenem Erntevorsatzgerät nach der Erfindung in einer Seitenansicht in der Transportstellung.
- Fig.5: Erntevorsatzgerät in gestreckter Länge in einer Draufsicht

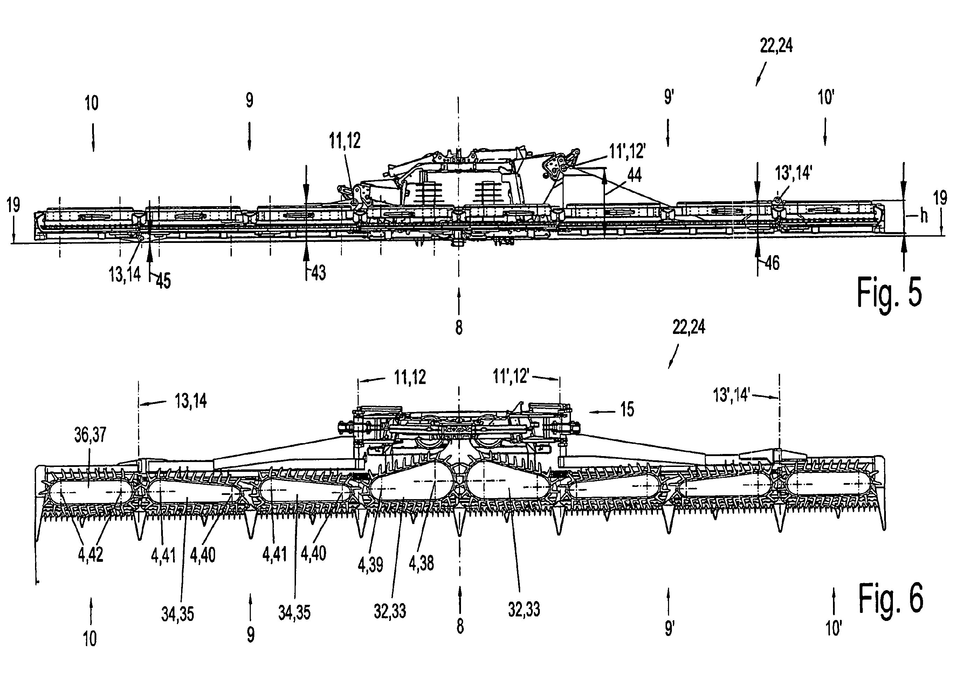

- Fig.5: Erntevosatzgerät in gestreckter Länge in eine Vorderansicht

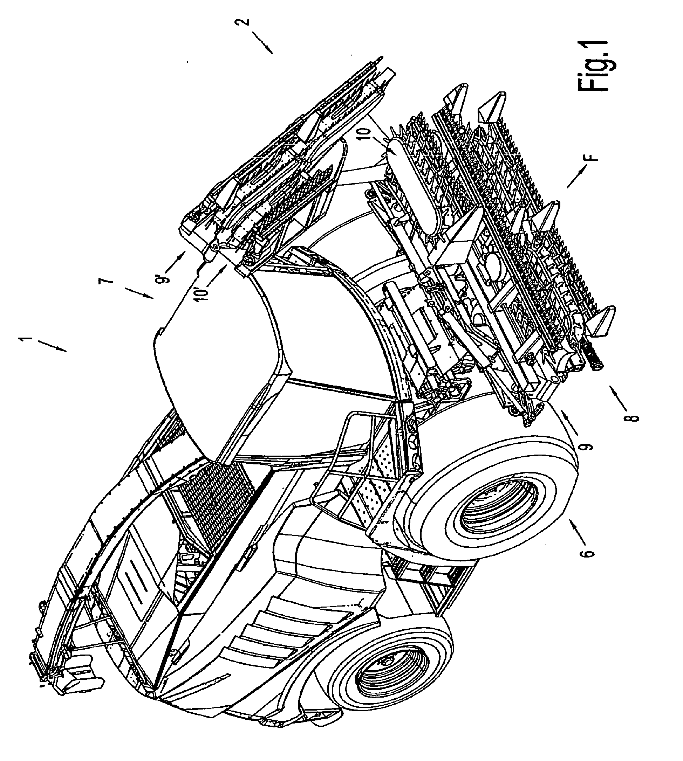

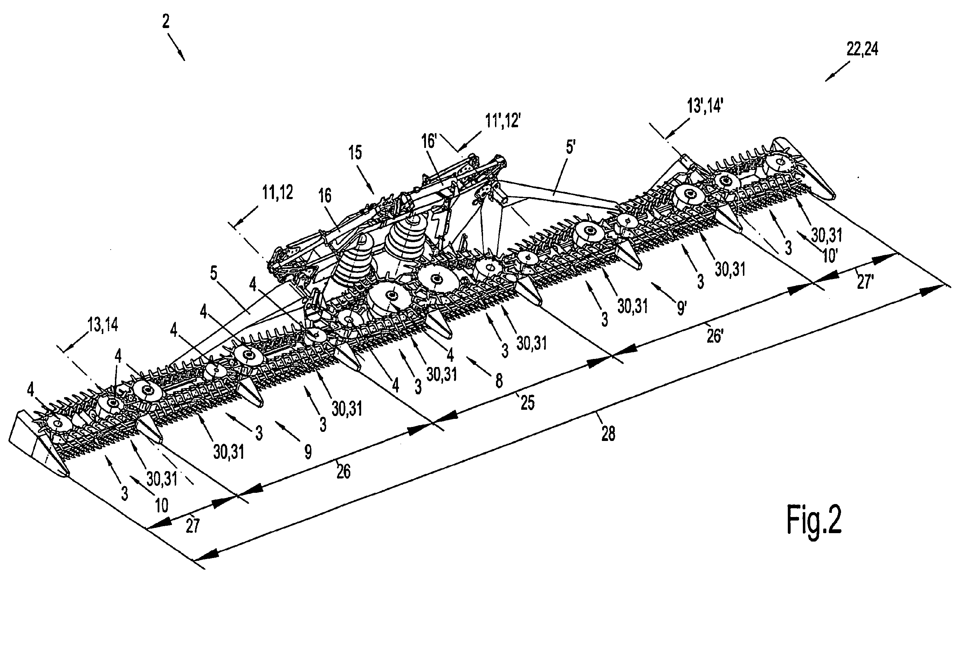

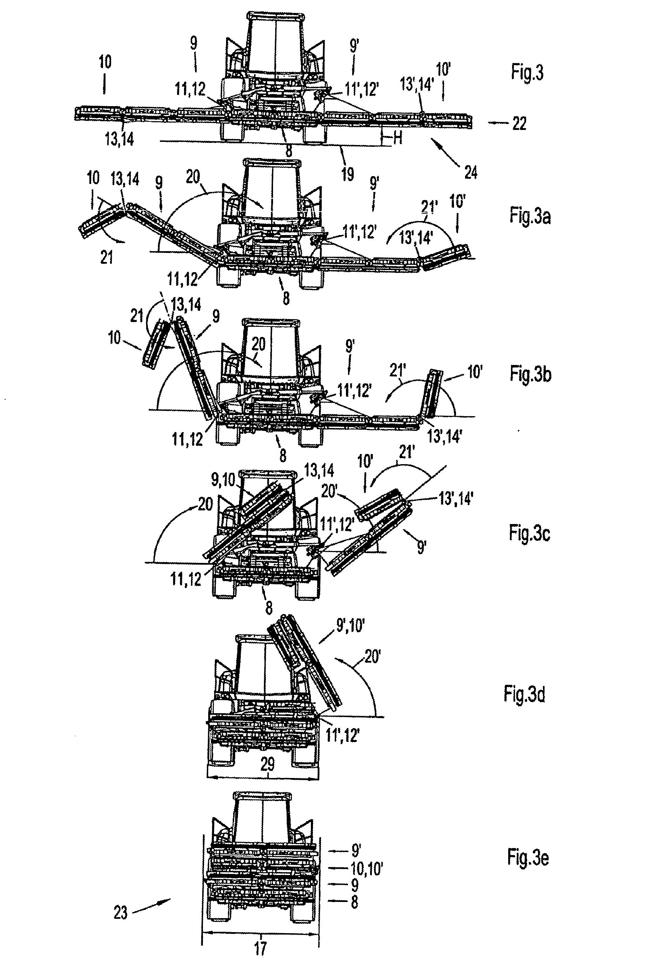

In Fig. 1 ist ein Trägerfahrzeug 1 mit einem Erntevorsatzgerät 2 nach der Erfindung in einer Draufsicht auf die Aufstandsebene 1a dargestellt und Fig.2 zeigt das Erntevorsatzgerät 2 in Arbeitsstellung und damit in gestreckter Lage in einer perspektivischen Draufsicht auf die Aufstandsebene 1a ohne Trägerfahrzeug. Fig. 3 bis Fig. 3e zeigen Momentaufnahmen des Klappvorgangs des Erntevorsatzgerätes 2 in verschiedenen Phasen des Klappvorgangs zur Überführung des Vorsatzgerätes in seine zusammengefaltete Transportstellung 23 oder alternativ umgekehrt in seine Arbeitsstellung 24. In Fig.3 ist das Erntevorsatzgerät 2 in der gestreckten Lage 22 der Arbeitstellung um den vertikalen Bodenabstand H von der Aufstandsfläche 19 des Bodens dargestellt, wie diese typisch ist für die Situation im Vorgewende.

Es handelt sich hierbei um eine selbstfahrende Erntemaschine, bekannt auch unter dem Begriff Feldhäcksler mit einem Maisgebiss. Dieses Erntevorsatzgerät 2 zum Anbau an selbstfahrende Feldhäcksler 1 zum Mähen und Aufnehmen und weiterfördern von stängeligem Erntegut ist insbesondere zur Ernte von Maispflanzen vorgesehen.

In der erfindungsgemäßen Ausführungsform ist eine Basiseinheit als Mittelteil, und damit als zentrale Mäh- und Einzugseinheit 8 vorgesehen, die im wesentlichen der Breite 29 des Trägerfahrzeugs 1 entspricht. Beidseitig dieses Mittelteils als zentrale Mäh- und Einzugseinheit 8 schließen sich an Auslegern 5,5' befestigte mittlere Seitenteile ausgebildet als mittlere Mäh- und Einzugseinheiten 9,9', und an diese weiter außenliegende Endseitenteile, ausgebildet als endseitige Mäh- und Einzugseinheiten 10,10' an. Die mittleren Mäh- und Einzugseinheiten 9,9' weisen etwa die gleiche Arbeitsbreite 26,26' wie die Arbeitsbreite 25 der zentralen Mäh- und Einzugseinheit 8 auf. Die endseitigen Mäh- und Einzugseinheiten 10,10' weisen als Arbeitsbreite 27,27' etwa die halbe Arbeitsbreite der Arbeitsbreiten 25 der zentralen Mäh- und Einzugseinheit 8 bzw. der mittleren Mäh- und Einzugseinheiten 9,9' auf.

Die zentrale Mäh- und Einzugseinheit 8, die mittleren Mäh- und Einzugseinheiten 9,9' und die endseitigen Mäh- und Einzugseinheiten 10,10' sind untereinander in Klappgelenken 11,11',13,13' um etwa in Fahrtrichtung F verlaufenden Schwenkachsen 12,12',14,14' untereinander und miteinander verbunden.

Die Mäh- und Einzugseinheiten 8,9,9',10,10' werden von entsprechenden Rahmenkonstruktionen aufgenommen, in denen sie um aufrechte Rotationsachsen 4 umlaufend angetrieben gelagert sind. Die mittleren Mäh- und Einzugseinheiten 9,9' und die endseitigen Mäh- und Einzugseinheiten 10,10' können um ihre etwa in Fahrtrichtung F verlaufenden Schwenkachsen 12,12',14,14' um jeweils etwa 180° derart verklappt werden, dass diese in der Transportstellung 23 gefaltet und etwa horizontal geschichtet übereinanderliegen.

Dabei werden die endseitigen Mäh- und Einzugseinheiten 10,10' um die Schwenkachsen 14,14' ihrer Klappgelenke 13,13'" welche sie mit den mittleren Mäh- und Einzugseinheiten 9,9' verbinden, um deren Schwenkachsen 12,12' in Schwenkbewegungen 21,21' versetzt und so zueinander verklappt, dass eine der endseitigen Mäh- und Einzugseinheiten 10' relativ zu der ihr direkt benachbarten mittleren Mäh- und Einzugseinheit 9' gleichsinnig zu der Drehrichtung der Schwenkbewegung 20', und die andere endseitige Mäh- und Einzugseinheit 9 relativ zu ihrer direkt benachbarten mittleren Mäh- und Einzugseinheit 10 gegensinnig zu der Drehrichtung der Schwenkbewegung 20 verklappt werden. Dabei werden im fortschreitenden Verklappungsvorgang mit den Schwenkbewegungen 20,20',21,21' die endseitigen Mäh- und Einzugseinheiten in ihre endgültige Transportlage der Transportstellung 23 so verschwenkt und derart mit den mittleren Mäh- und Einzugseinheiten zusammengefaltet, dass die endseitigen Mäh- und Einzugseinheiten 10,10' zwischen den beiden mittleren Mäh- und Einzugseinheiten 9,9' und dabei auf gleicher Höhe und in der selben Ebene liegen. Somit liegen sich die gefalteten Endseitenteile bzw. endseitigen Mäh- und Einzugseinheiten 10,10' in der Transportstellung 23 quer zur Fahrtrichtung gesehen diametral gegenüber. Fig.5 zeigt ein Erntevorsatzgerät in gestreckter Lage 22 und damit in Arbeitsstellung 24 in einer Draufsicht und Fig.5 zeigt das Erntevorsatzgerät in gestreckter Länge in einer Vorderansicht mit einer Blickrichtung entgegen der Fahrtrichtung F gesehen.

Die umlaufend angetriebenen Mäh- Einzugs- und Förderorgane 3 können trommelförmig, aber ebenso auch als endlos umlaufende Mäh- und Förderorgane 32,34,39, die an endlos umlaufenden Treibmitteln 33,35,37 befestigt sind, ausgebildet sein. Im letzteren Fall können die endlos umlaufenden Treibmittel 33,35,37 zur Aufnahme von Schneid- und Förderelementen als Kettenglieder, aber auch beispielsweise als Keil- oder Zahnriemen, ausgebildet sein. Um eine möglichst geringe vertikale Bauhöhe h der einzelnen Mäh- und Einzugseinheiten 8,9,9',10,10' zu erreichen, kann es von Vorteil sein, die Mäh- und Einzugseinheiten 8,9,9',10,10' ganz oder teilweise mit endlos umlaufenden Bandschneidwerkzeugen 31 oder alternativ auch mit oszillierenden Schneidwerkzeugen 30 auszugestalten. Die Mäh- und Einzugseinheiten 8,9,9',10,10' mit endlos umlaufenden Treibmitteln 33,35,37 können wahlweise mit gleichen oder unterschiedlichen Umlenkrollen, und damit mit gleichem oder unterschiedlichem Umlenkrollendurchmesser 38,39,40,41,42 ausgestaltet sein. Auch können Mäh- und Einzugseinheiten 8,9,9',10,10' mit einer durchgehenden, d.h. die gesamte Arbeitsbreite der Mäh- und Einzugseinheiten 8,9,9',10,10' überdeckenden, oder beispielsweise auch mit mehreren in reiheliegenden Treibmitteln 33,35 ausgestaltet sein. Unterschiedlich große Umlenkrollendurchmesser 38,39,40,41,42 an den Übergabestellen verbessern zudem das Auskämmen der Pflanzenstängel aus dem jeweils weiter außenliegenden und benachbarten Treibmittel. Die Fig.5 verdeutlicht zudem die geometrische Zuordnung der Klappgelenke 11,11',13,13' zueinander, die in unterschiedlichen vertikalen Höhenlagen 43,44,45,46 relativ zur Aufstandsfläche 19 liegen. Das Klappgelenk 13 liegt dabei im Wesentlichen unterhalb der Mäh- und Einzugseinheiten 8,9,9',10,10' und das komplementäre Klappgelenk 11 liegt im Wesentlichen knapp oberhalb der Mäh- und Einzugseinheiten 8,9,9',10,10'. Auf der gegenüberliegenden Seite liegt das Klappgelenk 13' etwa auf gleicher Höhe wie das Klappgelenk 13, wohingegen das Klappgelenk 11' das am höchsten gelegene Klappgelenk darstellt. Die Gründe dafür sind für den Fachmann leicht nachvollziehbar und es bedarf daher dazu keinerlei weiterer Erläuterungen. Diese Unterschiede in den Höhenlagen der Gelenke 11,11',13,13' stehen somit in einer Beziehung zur Bauhöhe h derart, dass die Mäh- und Einzugseinheiten 8,9,9',10,10' im zusammengeklappten Zustand möglichst dicht aufeinander liegen.

Als Stellantriebe 16,16' zur Betätigung der Klappvorgänge sind vorzugsweise Hydraulikzylinder vorgesehen, die an das Bordhydrauliksystem des Trägerfahrzeugs 1 über bekannte Kupplungsvorrichtungen an dieses angekuppelt werden. Dabei können alle Klappstellen der Klappgelenke von je einem separaten Hydraulikzylinder als Stellantrieb betätigt werden oder alternativ kann eine Stellantrieb auch aus einer Kombination von Hydraulikzylinder und Koppelgetrieben, wie sie dem Fachmann von Vorsatzgeräten dieser Art bekannt sind, ausgebildet sein.

Die Befehlselemente der Steuerung sind am Fahrerplatz des Trägerfahrzeugs 1 in der Fahrerkabine 7 angeordnet. Die Steuerelemente bzw. die Aktoren der Steuerung des Klappvorgangs sind Teil des Erntevorsatzgerätes 2 und die Befehlselemente der Steuerung sind auf dem Trägerfahrzeug 1 in der Fahrerkabine 7 untergebracht. Der Ablauf des Klapp- bzw. Faltvorgangs wird vorzugsweise von einer Folgesteuerung bewerkstelligt. Die Folgesteuerung kann durch an sich bekannte hydraulische Steuerelemente, wie Drosseln, Blenden, Drosselrückschlagventile, Mengenteiler, Stromregel- und Wegeventile, und/oder einer Kombination dieser Elemente realisiert werden.

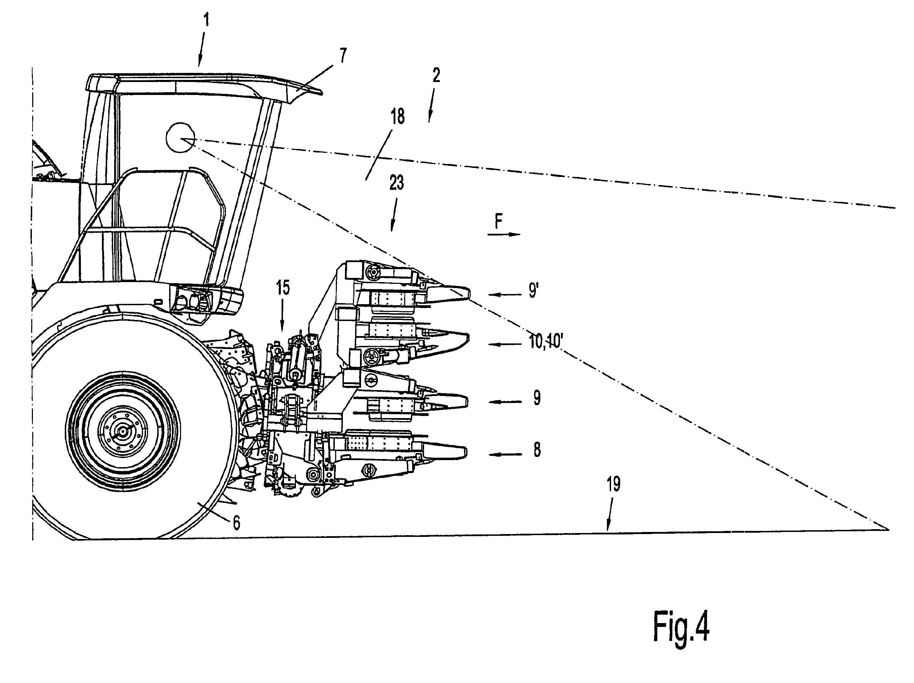

Darüber hinaus ist die Einkopplung des Antriebs von dem Trägerfahrzeug 1 in das Erntevorsatzgerät 2 in an sich bekannter Weise zu bewerkstelligen. Vorteilhafterweise ist die Zentrale Mäh- und Einzugseinheit 8 mittig vor den Vorderädern 6 des Trägerfahrzeug 1 und mittels einer dem Fachmann bekannten Kupplungsvorrichtung 15 angeordnet. Weiterhin ist sie so ausgebildet, dass sie sich im wesentlichen über die gesamte Breite des Trägerfahrzeugs 29 erstreckt. Diese Breite entspricht damit auch etwa der Transportbreite 17 des zusammengeklappten Erntevorsatzgerätes 1 in der Transportstellung 23. Fig.4 zeigt diese Transportstellung 23 in einer Seitenansicht des Trägerfahrzeugs 1 und zugleich auch den Verlauf des Sichtkegels 18 oberhalb des zusammengefalteten Erntevorsatzgerätes 1.

Erfindungsgemäß ist somit trotz der großen Gesamtbreite 28 des Erntegerätes 2 von etwa 12 Metern im zusammengefalteten Zustand des Selben 2 in der Transportstellung 23 ein völlig ausreichender Sichtkegel 18 und damit ein freier Blick auf die Aufstandsfläche 19 bzw. der Fahrbahn und damit auch seitlich der Fahrbahn gegeben. Dieses vermittelt dem Fahrer eine gute Rundumsicht von seinem Fahrerplatz aus der Fahrerkabine 7 heraus, welches die ergonomischen Stressbelastung hinsichtlich der Konzentration auf das gesamte Umfeld außerhalb Fahrerkabine in der Transportfahrt erheblich mindert, wobei die Erfindung somit gleichermaßen einen Beitrag zur Erhöhung der Verkehrssicherheit im öffentlichen Raum darstellt.

### Bezugszeichenliste

- 1: Trägerfahrzeug
- 2: Erntevorsatzgerät
- 3: Mäh-, Einzugs- und Förderorgan
- 4: Rotationsachse
- 5,5': Auslegerarm
- 6: Vorderräder
- 7: Fahrerkabine
- 8: zentrale Mäh- und Einzugseinheit
- 9,9': mittlere Mäh- und Einzugseinheit
- 10,10': endseitige Mäh- und Einzugseinheit
- 11,11': Klappgelenk
- 12,12': Schwenkachsen
- 13,13': Klappgelenk
- 14,14': Schwenkachsen
- 15: Kupplungseinrichtung
- 16,16': Stellantrieb
- 17: Transportbreite
- 18: Sichtkegel
- 19: Aufstandsfläche
- 20,20': Schwenkbewegung
- 21,21': Schwenkbewegung
- 22: gestreckte Lage
- 23: Transportstellung, (Transportlage)
- 24: Arbeitsstellung
- 25: Arbeitsbreite
- 26,26': Arbeitsbreite
- 27,27': Arbeitsbreite
- 28: Gesamtarbeitsbreite
- 29: Breite Trägerfahrzeug
- 30: oszillierendes Schneidwerkzeug
- 31: Bandschneidwerkzeug
- 32: endlos umlaufende Mäh- und Förderorgane
- 33: endlos umlaufendes Treibmittel
- 34: endlos umlaufende Mäh- und Förderorgane
- 35: endlos umlaufendes Treibmittel
- 36: endlos umlaufende Mäh- und Förderorgane
- 37: endlos umlaufendes Treibmittel
- 38: Durchmesser der Umlenkrollen
- 39: Durchmesser der Umlenkrolle
- 40: Durchmesser der Umlenkrolle
- 41: Durchmesser der Umlenkrolle
- 42: Durchmesser der Umlenkrolle
- 43: Höhenlage
- 44: Höhenlage
- 45: Höhenlage
- 46: Höhenlage
- H: vertikaler Bodenabstand
- h: Bauhöhe
- F: Fahrtrichtung

## Patentansprüche

1. Erntevorsatzgerät (2) zum Anbau an selbstfahrende Feldhäcksler, zum Mähen, Aufnehmen und Weiterfördern von stängeligem Erntegut, mit einer zentralen Mäh- und Einzugseinheit (8) und beidseitig an diesen in Klappgelenken um etwa in Fahrtrichtung (F) verlaufenden Schwenkachsen (12,12') angeschlossene mittlere Mäh- und Einzugseinheiten (9,9') an denen sich je eine weitere in einem KlappgelenK (13,13') um etwa in Fahrtrichtung (F) verlaufende Schwenkachse (14,14') angeschlossene endseitige Mäh- und Einzugseinheit (10,10') anschließt, wobei die Mäh- und Einzugseinheiten um aufrechte Achsen umlaufend antreibbare Mäh- Einzugs- und Förderorgane aufweisen, wobei die mittleren und endseitigen Mäh- und Einzugseinheiten (9, 9' 10, 10') um Schwenkachsen (12,12',14, 14') von Klappgelenken durch Stellantriebe (16,16') in eine Transportstellung (23) verklappt werden können, **dadurch gekennzeichnet, dass** die endseitigen Mäh- und Einzugseinheiten (10,10') und die mittleren Mäh- und Einzugseinheiten (9,9') um Schwenkachsen (12,12',14,14') von Klappgelenken (11,11',13,13',), welche diese (9,9',10,10') untereinander und mit der zentralen Mäh- und Einzugseinheit (8) derart verklappbar verbinden, dass die endseitigen Mäh- und Einzugseinheiten (10,10') in eine Transportlage der Transportstellung (23) oberhalb einer der beiden mittleren Mäh- und Einzugseinheiten (9 oder 9') und dabei zugleich unterhalb einer der beiden mittleren Mäh- und Einzugseinheiten (9 oder 9') liegen.

2. Erntevorsatzgerät (2) nach Anspruch 1, **dadurch gekennzeichnet, dass** die endseitigen Mäh- und Einzugseinheiten (10,10') relativ zu ihren direkt benachbarten mittleren Mäh- und Einzugseinheiten (9,9') um Schwenkachsen (14,14') von Klappgelenken (13,13') so verschwenkt werden, dass eine der endseitigen Mäh- und Einzugseinheiten (10,10') gleichsinnig zur Drehrichtung der Schwenkbewegung (20 oder 20') der ihr direkt benachbarten mittleren Mäh- und Einzugseinheit (9,9'), und die andere endseitige Mäh- und Einzugseinheit (10 oder 10') gegensinnig zu ihrer direkt benachbarten mittleren Mäh- und Einzugseinheit (9,9') in ihre Transportlage (23) verschwenkt werden können.

3. Erntevorsatzgerät nach Anspruch 2, **dadurch gekennzeichnet, dass** die endseitigen Mäh- und Einzugseinheiten (10,10') in ihrer Transportstellung (23) zwischen den beiden mittleren Mäh- und Einzugseinheiten (9,9') etwa auf gleicher Höhe in der selben Ebene liegen.

4. Erntevorsatzgerät nach Anspruch 3, **dadurch gekennzeichnet, dass** die endseitigen Mäh- und Einzugseinheiten (10,10') in der Transportstellung (23) sich diametral gegenüber liegen.

5. Erntevorsatzgerät nach Anspruch 3, **dadurch gekennzeichnet, dass** die zentrale, mittleren und endseitigen Mäh- und Einzugseinheiten (8,9,9',10,10') etwa parallel zueinander geschichtet und gefaltet übereinander liegen.

6. Erntevorsatzgerät nach Anspruch 1, **dadurch gekennzeichnet, dass** die Arbeitsbreite (25) der zentralen Mäh- und Einzugseinheit (8) etwa der Breite (29) des Trägerfahrzeugs (1) entspricht.

7. Erntevorsatzgerät nach Anspruch 1, **dadurch gekennzeichnet, dass** die Arbeitsbreite (26,26') der mittleren Mäh- und Einzugseinheiten (9,9') etwa der Arbeitsbreite (25) der zentralen Mäh- und Einzugseinheit (8) entspricht.

8. Erntevorsatzgerät nach Anspruch 1, **dadurch gekennzeichnet, dass** die Arbeitsbreite (27,27') der endseitigen Mäh- und Einzugseinheiten (10,10') etwa der halben Arbeitsbreite (25) der zentralen Mäh- und Einzugseinheit (8) entspricht.

9. Erntevorsatzgerät nach Anspruch 1, **dadurch gekennzeichnet, dass** die Arbeitsbreite (27,27') der endseitigen Mäh- und Einzugseinheiten (10,10') etwa der halben Arbeitsbreite (26,26') der mittleren Mäh- und Einzugseinheit (8) entspricht.

10. Erntevorsatzgerät nach Anspruch 1, **dadurch gekennzeichnet, dass** die umlaufend angetriebenen Mäh- Einzugs- und Förderorgane (3) wenigstens einer Mäh- und Einzugseinheit (8,9,9',10,10') scheiben- und/oder trommelförmig ausgebildet sind.

11. Erntevorsatzgerät nach Anspruch 1, **dadurch gekennzeichnet, dass** die umlaufend angetriebenen Mäh- Einzugs- und Förderorgane (3) wenigstens einer Mäh- und Einzugseinheit (8,9,9',10,10') als endlos umlaufend angetriebenen Mäh- Einzugs- und Förderorgane (3) ausgebildet sind.

12. Erntevorsatzgerät nach Anspruch 1, **dadurch gekennzeichnet, dass** eines oder mehrere der Mäh- und Einzugseinheiten (8,9,9',10,10') mit endlos umlaufenden Bandschneidwerkzeugen (31) ausgestattet sind.

13. Erntevorsatzgerät nach Anspruch 1, **dadurch gekennzeichnet, dass** eines oder mehrere der Mäh- und Einzugseinheiten (8,9,9',10,10') mit oszillierenden Schneidwerkzeugen (30) ausgestattet sind.

14. Erntevorsatzgerät nach Anspruch 1, **dadurch gekennzeichnet, dass** die Stellantriebe (16,16') zur Betätigung der Schwenkbewegungen (20,20'21,21') des Klappvorgangs als Hydraulikzylinder ausgebildet sind.

15. Erntevorsatzgerät nach Anspruch 1, **dadurch gekennzeichnet, dass** alle Klappgelenke (11,11',13,13') mit Stellantriebe (16,16') zur Betätigung der Schwenkbewegungen (20,20'21,21') um die Schwenkachsen (12,12',14,14') von je einem separaten Hydraulikzylinder betätigt werden.

16. Erntevorsatzgerät nach Anspruch 1, **dadurch gekennzeichnet, dass** die Stellantriebe (16,16') zur Herbeiführung der Schwenkbewegungen (20,20'21,21') um die Schwenkachsen (12,12',14,14') eine Kombination aus Hydraulikzylindern und Koppelgetrieben aufweisen.

## Claims

1. A harvesting front-mounted attachment (2) for mounting to self-propelled forage harvesters for cutting, picking up and passing on stalked crop material, comprising a middle cutting and intake unit (8) and central cutting and intake units (9, 9') which are connected at both sides thereto in pivot joints about pivot axes (12, 12') expending in the travel direction (F) and which are each adjoined by a further end-side cutting and intake unit (10, 10') connected at a pivot joint (13, 13') about a pivot axis (14, 14') extending in the travel direction (F), wherein the cutting and intake units have cutting, intake and conveyor members drivable in rotation about perpendicular axes, wherein the central and end-side cutting and intake units (9, 9', 10, 10') can be pivoted into a transport position (2, 3) about pivot axes (12, 12', 14, 14') of pivot joints by adjusting drives (16, 16'), **characterised in that** the end-side cutting and intake units (10, 10') and the central cutting and intake units (9, 9') are pivotable about pivot axes (12, 12', 14, 14') of pivot joints (11, 11', 13,13') which connect same (9, 9', 10, 10') together and to the middle cutting and intake unit (8) pivotably in such a way that the end-side cutting and intake units (10, 10') lie in a transport condition of the transport position (23) above one of the two central cutting and intake units (9 or 9') and **in that** case at the same time beneath one of the two central cutting and intake units (9 or 9').

2. A harvesting front-mounted attachment (2) according to claim 1 **characterised in that** the end-side cutting and intake units (10, 10') are pivoted relative to their directly adjacent central cutting and intake units (9, 9') about pivot axes (14, 14') of pivot joints (13, 13') in such a way that one of the end-side cutting and intake units (10, 10') can be pivoted in the same direction in relation to the direction of rotation of the pivotal movement (20 or 20') of the central cutting and intake unit (9, 9') directly adjacent thereto and the other end-side cutting and intake unit (10 or 10') can be pivoted in the opposite direction in relation to the directly adjacent central cutting and intake unit (9, 9') thereof into the transport position (23) thereof.

3. A harvesting front-mounted attachment according to claim 2 **characterised in that** the end-side cutting and intake units (10, 10') in their transport position (23) lie between the two central cutting and intake units (9, 9') approximately at the same height in the same plane.

4. A harvesting front-mounted attachment according to claim 3 **characterised in that** the end-side cutting and intake units (10, 10') are in diametrally opposite relationship in the transport position (23).

5. A harvesting front-mounted attachment according to claim 3 **characterised in that** the middle, central and end-side cutting and intake units (8, 9, 9', 10, 10') lie in approximately mutually parallel layered and folded superposed relationship.

6. A harvesting front-mounted attachment according to claim 1 **characterised in that** the worming width (25) of the middle cutting and intake unit (8) approximately corresponds to the width (29) of the carrier vehicle (1).

7. A harvesting front-mounted attachment according to claim 1 **characterised in that** the working width (26, 26') of the central cutting and intake units (9, 9') approximately corresponds to the working width (25) of the middle cutting and intake unit (8).

8. A harvesting front-mounted attachment according to claim 1 **characterised in that** the working width (27, 27') of the end-side cutting and intake units (10, 10') approximately corresponds to half the working width (25) of the middle cutting and intake unit (8).

9. A harvesting front-mounted attachment according to claim 1 **characterised in that** the working width (27, 27') of the end-side cutting and intake units (10, 10') approximately corresponds to half the working width (26, 26') of the central cutting and intake unit (8).

10. A harvesting front-mounted attachment according to claim 1 **characterised in that** the peripherally driven cutting, intake and conveyor members (3) of at least one cutting and intake unit (8, 9, 9', 10, 10') are of a disc-shaped and/or drum-shaped configuration.

11. A harvesting front-mounted attachment according to claim 1 **characterised in that** the peripherally driven cutting, intake and conveyor members (3) of at least one cutting and intake unit (8, 9, 9', 10,10') are in the form of endlessly peripherally driven cutting, intake and conveyor members (3).

12. A harvesting front-mounted attachment according to claim 1 **characterised in that** one or more of the cutting and intake units (8, 9, 9', 10, 10') are equipped with endlessly rotating belt cutting tools (31).

13. A harvesting front-mounted attachment according to claim 1 **characterised in that** one or more of the cutting and intake units (8, 9, 9', 10, 10') are equipped with oscillating cutting tools (30).

14. A harvesting front-mounted attachment according to claim 1 **characterised in that** the adjusting drives (16, 16') for actuation of the pivotal movements (20, 20', 21, 21') of the pivoting process are in the form of hydraulic cylinders.

15. A harvesting front-mounted attachment according to claim 1 **characterised in that** all pivot joints (11, 11', 13, 13') with adjusting drives (16, 16') for actuation of the pivotal movements (20, 20', 21, 21') about the pivot axes (12, 12', 14, 14') are actuated by a respective separate hydraulic cylinder.

16. A harvesting front-mounted attachment according to claim 1 **characterised in that** the adjusting drives (16, 16') for producing the pivotal movements (20, 20', 21, 21') about the pivot axes (12, 12', 14, 14') have a combination of hydraulic cylinders and coupling transmissions.

## Revendications

1. Outil frontal de récolte (2) à monter sur des ensileuses automotrices, pour moissonner, ramasser et acheminer du produit de récolte en tiges, comprenant une unité centrale de moissonnage et d'amenée (8) et, de part et d'autre de celle-ci, des unités intermédiaires de moissonnage et d'amenée (9, 9') qui y sont reliées par des articulations pliantes autour d'axes de pivotement (12, 12') orientés sensiblement dans le sens de la marche (F) et à chacune desquelles se raccorde une unité terminale de moissonnage et d'amenée (10, 10') reliée par une articulation pliante (13, 13') autour d'un axe de pivotement (14, 14') orienté sensiblement dans le sens de la marche (F), les unités de moissonnage et d'amenée comportant des organes de moissonnage, d'amenée et d'alimentation entraînés en rotation autour d'axes verticaux, les unités intermédiaires et terminales de moissonnage et d'amenée (9, 9', 10, 10') pouvant être repliées en position de transport (23) autour d'axes de pivotement (12, 12', 14, 14') d'articulations pliantes à l'aide de mécanismes de commande (16, 16'), **caractérisé en ce que** les unités terminales de moissonnage et d'amenée (10, 10') et les unités intermédiaires de moissonnage et d'amenée (9, 9') sont montées pivotantes autour d'axes de pivotement (12, 12', 14, 14') d'articulations pliantes (11, 11', 13, 13'), qui relient celles-ci (9, 9', 10, 10') entre elles et à l'unité centrale de moissonnage et d'amenée (8), de manière telle que, dans une position de transport (23), les unités terminales de moissonnage et d'amenée (10, 10') se trouvent au-dessus d'une des deux unités intermédiaires de moissonnage et d'amenée (9 ou 9') et en même temps au-dessous d'une des deux unités intermédiaires de moissonnage et d'amenée (9 ou 9').

2. Outil frontal de récolte (2) selon la revendication 1, **caractérisé en ce que**, par rapport aux unités intermédiaires de moissonnage et d'amenée (9, 9') immédiatement voisines, les unités terminales de moissonnage et d'amenée (10, 10') pivotent autour d'axes de pivotement (14, 14') d'articulations pliantes (13, 13'), de façon qu'une des unités terminales de moissonnage et d'amenée (10, 10') puisse pivoter en position de transport (23) dans le même sens de rotation que celui du mouvement pivotant (20 ou 20') de l'unité intermédiaire de moissonnage et d'amenée (9, 9') immédiatement voisine, et de façon que l'autre unité terminale de moissonnage et d'amenée (10 ou 10') puisse pivoter en position de transport (23) dans le sens opposé à celui de son unité intermédiaire de moissonnage et d'amenée (9, 9') immédiatement voisine.

3. Outil frontal de récolte selon la revendication 2, **caractérisé en ce que**, dans leur position de transport (23), les unités terminales de moissonnage et d'amenée (10, 10') se trouvent entre les deux unités intermédiaires de moissonnage et d'amenée (9, 9'), sensiblement à la même hauteur et dans un plan identique.

4. Outil frontal de récolte selon la revendication 3, **caractérisé en ce que**, dans la position de transport (23), les unités terminales de moissonnage et d'amenée (10, 10') sont diamétralement opposées.

5. Outil frontal de récolte selon la revendication 3, **caractérisé en ce que** les unités centrale, intermédiaires et terminales de moissonnage et d'amenée (8, 9, 9', 10, 10') sont empilées sensiblement parallèlement les unes aux autres et rabattues les unes sur les autres.

6. Outil frontal de récolte selon la revendication 1, **caractérisé en ce que** la largeur de travail (25) de l'unité centrale de moissonnage et d'amenée (8) correspond sensiblement à la largeur (29) du véhicule porteur (1).

7. Outil frontal de récolte selon la revendication 1, **caractérisé en ce que** la largeur de travail (26, 26') des unités intermédiaires de moissonnage et d'amenée (9, 9') correspond sensiblement à la largeur de travail (25) de l'unité centrale de moissonnage et d'amenée (8).

8. Outil frontal de récolte selon la revendication 1, **caractérisé en ce que** la largeur de travail (27, 27') des unités terminales de moissonnage et d'amenée (10, 10') correspond sensiblement à la moitié de la largeur de travail (25) de l'unité centrale de moissonnage et d'amenée (8).

9. Outil frontal de récolte selon la revendication 1, **caractérisé en ce que** la largeur de travail (27, 27') des unités terminales de moissonnage et d'amenée (10, 10') correspond sensiblement à la moitié de la largeur de travail (26, 26') de l'unité intermédiaire de moissonnage et d'amenée (8) .

10. Outil frontal de récolte selon la revendication 1, **caractérisé en ce que** les organes de moissonnage, d'amenée et d'alimentation entraînés en rotation (3) d'au moins une unité de moissonnage et d'amenée (8, 9, 9', 10, 10') sont conformés en disques et/ou en tambours.

11. Outil frontal de récolte selon la revendication 1, **caractérisé en ce que** les organes de moissonnage, d'amenée et d'alimentation entraînés en rotation (3) d'au moins une unité de moissonnage et d'amenée (8, 9, 9', 10, 10') sont conformés en organes de moissonnage, d'amenée et d'alimentation entraînés en rotation sans fin (3).

12. Outil frontal de récolte selon la revendication 1, **caractérisé en ce qu'**une ou plusieurs des unités de moissonnage et d'amenée (8, 9, 9', 10, 10') sont équipées d'outils de coupe en bande à rotation sans fin (31).

13. Outil frontal de récolte selon la revendication 1, **caractérisé en ce qu'**une ou plusieurs des unités de moissonnage et d'amenée (8, 9, 9', 10, 10') sont équipées d'outils de coupe oscillants (30).

14. Outil frontal de récolte 1, **caractérisé en ce que** les mécanismes de commande (16, 16') servant à générer les mouvements pivotants (20, 20', 21, 21') du processus de pliage sont conformés en vérins hydrauliques.

15. Outil frontal de récolte selon la revendication 1, **caractérisé en ce que** toutes les articulations pliantes (11, 11', 13, 13') associées à des mécanismes de commande (16, 16') servant à générer les mouvements pivotants (20, 20', 21, 21') autour des axes de pivotement (12, 12', 14, 14') sont chacune actionnées par un vérin hydraulique séparé.

16. Outil frontal de récolte selon la revendication 1, **caractérisé en ce que**, pour provoquer les mouvements pivotants (20, 20', 21, 21') autour des axes de pivotement (12, 12', 14, 14'), les mécanismes de commande (16, 16') comportent une combinaison de vérins hydrauliques et de mécanismes d'accouplement.
